# EUROPÄISCHE PATENTANMELDUNG

(11) **EP 3 505 548 A1**
(43) Veröffentlichungstag der Anmeldung: **03.07.2019**
(21) Anmeldenummer: 17210825.0
(22) Anmeldetag: 28.12.2017
(51) Int. Cl.: C08G 18/73, C08G 18/75, C08G 18/79, C08G 18/80, C08G 18/28

(54) **ALKOXYSILANMODIFIZIERTE POLYHARNSTOFFVERBINDUNGEN AUF BASIS EINER MISCHUNG VON DIALKOXY- UND TRIALKOXYSILANEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Eine Polyharnstoffverbindung, herstellbar durch Umsetzung eines Polyisocyanats mit einem Dialkoxyaminosilan gemäß der allgemeinen Formel R¹(R¹O)₂Si(CH₂)ₘNHR² und gegebenenfalls zusätzlich mit einem Trialkoxyaminosilan gemäß der allgemeinen Formel (R¹O)₃Si(CH₂)ₙNHR² wobei die Reste R¹ unabhängig voneinander ausgewählt sind aus C₁-C₂₀-Alkyl oder C₆-C₂₀-Aryl, n und m jeweils ganze Zahlen zwischen 1 und 4 sind, die Reste R² unabhängig voneinander ausgewählt sind aus -H, C₁-C₂₀-Alkyl , C3-C12-Cycloalkyl, und -CHR³CH₂COOR⁴, die Reste R³ unabhängig voneinander ausgewählt sind aus H, C₁-C₂₀-Alkyl und -COOR⁴, und die Reste R⁴ unabhängig voneinander C₁-C₂₀-Alkyl darstellen. Die Erfindung betrifft ferner die Verwendung der Verbindung als Bindemittel zur Herstellung von Beschichtungen.

## Beschreibung

### Gebiet der Erfindung

Die vorliegende Erfindung betrifft alkoxysilanmodifizierte Polyharnstoffverbindungen auf Basis von Dialkoxysilanen bzw. einer Mischung von Dialkoxy- und Trialkoxysilanen und deren Verwendung als Bindemittel in Beschichtungen, insbesondere im Bereich des Korrosionsschutzes.

### Stand der Technik

Die Verwendung alkoxysilanmodifizierter Polyharnstoffverbindungen als Bindemittel in Beschichtungen ist bekannt. Die Verbindungen weisen endständige Alkoxysilangruppen auf, welche die Eigenschaft haben, bei Kontakt mit geringen Mengen Feuchtigkeit zu Organsilanolen zu hydrolysieren und durch nachfolgende Kondensation zu Organosiloxanen zu polymerisieren. Diese Polymerisation führt zu einer auch als Aushärtung bezeichneten Vernetzung der silanmodifizierten Polyharnstoffverbindung. Wegen dieser Fähigkeit zur weiteren Vernetzung werden silanmodifizierte Polyharnstoffverbindungen auch als silanterminierte Präpolymere (STP) bezeichnet und eignen sich als Bindemittel für feuchtigkeitshärtende Beschichtungen.

Die EP 0 949 284 A1 beschreibt silanmodifizierte Polyisocyanate mit einem Anteil freier Isocyanatgruppen von 0.2 bis 20 Gew.-%. Diese Polyisocyanate eignen sich als Bindemittel in Kombination mit einer isocyanatreaktiven Komponente zur Herstellung von Zwei-Komponenten-Beschichtungen, -Klebstoffen und -Dichtstoffen. Für die Anwendung in Zwei-Komponenten-Systemen ist die Gegenwart freier Isocyanatgruppen erforderlich. Aufgrund der hohen Reaktivität freier Isocyanatgruppen stellen diese Verbindungen und die diese enthaltenden Zusammensetzungen jedoch eine mögliche toxikologische Gefahr für den Anwender dar. Aus diesem Grund besteht ein Bedarf an isocyanatfreien Bindemitteln.

Die EP 0 924 231 A1 beschreibt wässrige Dispersionen von Polyurethan/Polyharnstoff-Verbindungen auf Basis von Polyisocyanaten, die mit Polyolen und Aminosilanen umgesetzt wurden. Um die Dispergierbarkeit in Wasser zu gewährleisten, weisen die Verbindungen vorzugsweise zusätzliche anionische Gruppen auf. Diese Verbindungen können beispielsweise als Bindemittel für Beschichtungen, Klebstoffe und Dichtstoffe eingesetzt werden. Eine Verwendung in Korrosionsschutzsystemen, insbesondere in nicht-wässrigen Decklackbeschichtungen wird nicht offenbart.

Die DE 10 2012 204 298 A1 beschreibt Bindemittel auf Basis von Polyisocyanaten, die mit sekundären Aminosilanen zu silanmodifizierten Polyharnstoffverbindungen umgesetzt werden. Als Aminosilane werden dabei sekundäre N-Alkyl-, N-Cycloalkyl- oder N-Aryl-aminoalkoxysilane eingesetzt. Als Polyisocyanate werden aliphatische oder cycloaliphatische, monomere oder oligomere Polyisocyanate eingesetzt. Durch die nahezu quantitative Umsetzung des Polyisocyanats mit dem Aminosilan enthalten diese Bindemittel einen sehr geringen Anteil freier Isocyanatgruppen. Die Kombination dieser Bindemittel mit bestimmten Härtungskatalysatoren erlaubt die Herstellung von Beschichtungen mit hoher mechanischer Beständigkeit.

Die WO 2012/002932 A1 beschreibt Ein-Komponenten-Beschichtungen für den Einsatz im Schiffsbau. Diese Beschichtungen zeichnen sich durch eine hohe UV-Beständigkeit aus. Die Beschichtungen enthalten ein Bindemittel auf Basis von Polyisocyanaten, die mit sekundären Aminosilanen zu silanmodifizierten Polyharnstoffverbindungen umgesetzt werden. Als Aminosilane werden wie auch in der DE 10 2012 204 298 A1 sekundäre N-Alkyl-, N-Cycloalkyl- oder N-Aryl-aminoalkoxysilane eingesetzt. Ebenso werden als Polyisocyanate aliphatische oder cycloaliphatische, monomere oder oligomere Polyisocyanate eingesetzt.

Die in DE 10 2012 204 298 A1 und WO 2012/002932 A1 offenbarten Bindemittel erfüllen grundsätzlich die Anforderungen an isocyanatfreie Bindemittel und eignen sich für den Einsatz in Beschichtungen, insbesondere als Deckbeschichtung in einem Korrosionsschutzsystem.

Allerdings besteht weiterhin Bedarf an kostengünstig herzustellenden Beschichtungen mit verbesserten technischen Eigenschaften. Von besonderem Interesse ist dabei die Verbesserung des Glanzwertes der Beschichtungen.

### Beschreibung der Erfindung

Aus diesem Grund ist es Aufgabe der Erfindung ein Bindemittel für den Einsatz in Beschichtungen bereitzustellen, mit dem der Glanzwert der Beschichtung verbessert werden kann. Das Bindemittel soll sich insbesondere für den Einsatz in einer Deckbeschichtung eines Korrosionsschutzsystems eignen. Darüber hinaus soll die Erfindung ein isocyanatfreies und insofern toxikologisch unbedenkliches Bindemittel bereitstellen. Vorzugsweise soll das Bindemittel während der Härtung auch kein Methanol freisetzen. Des Weiteren soll das Bindemittel vorzugsweise kostengünstig herzustellen sein.

### Silanmodifizierte Polyharnstoffverbindung

Diese Aufgabe wird gelöst durch eine silanmodifizierte Polyharnstoffverbindung, herstellbar durch Umsetzung
eines Polyisocyanats
mit einem Dialkoxyaminosilan gemäß der allgemeinen Formel (I)

R¹(R¹O)₂Si(CH₂)ₘNHR² (I)

und gegebenenfalls zusätzlich mit einem Trialkoxyaminosilan gemäß der allgemeinen Formel (II)

(R'O)₃Si(CH₂)ₙNHR² (II)

wobei die Reste R¹ unabhängig voneinander ausgewählt sind aus C₁-C₂₀-Alkyl oder C₆-C₂₀-Aryl,
n und m jeweils ganze Zahlen zwischen 1 und 4 sind,
die Reste R² unabhängig voneinander ausgewählt sind aus -H, C₁-C₂₀-Alkyl, C₃-C₁₂-Cycloalkyl, und -CHR³CH₂COOR⁴,
die Reste R³ unabhängig voneinander ausgewählt sind aus H, C₁-C₂₀-Alkyl und -COOR⁴, und
die Reste R⁴ unabhängig voneinander C₁-C₂₀-Alkyl darstellen.

Die erfindungsgemäßen Verbindungen sind dadurch gekennzeichnet, dass sie mit Dialkoxysilangruppen bzw. einer Mischung von Trialkoxy- und Dialkoxysilangruppen funktionalisiert sind. Aufgrund dieses Merkmals zeigen Beschichtungen, die die erfindungsgemäßen Verbindungen als Bindemittel enthalten, höhere Glanzwerte als diejenigen Beschichtungen, welche ausschließlich Bindemittel mit Trialkoxysilangruppen enthalten. Dabei wird ein ausreichend hoher Glanzwert bereits bei einem relativ niedrigen molaren Anteil von Dialkoxysilangruppen erzielt.

Die erfindungsgemäßen Verbindungen haben einen geringen Anteil freier Isocyanatgruppen. Damit sind die erfindungsgemäßen Verbindungen toxikologisch unbedenklich und leicht zu handhaben. Vorzugsweise beträgt der Anteil freier Isocyanatgruppen weniger als 0,2 Gew.-%, besonders bevorzugt weniger als 0,01 Gew.-%, am meisten bevorzugt weniger als 0,001 Gew.-%. Idealerweise weisen die Verbindungen innerhalb der Nachweisgenauigkeit keine freien Isocyanatgruppen auf. Der Anteil freier Isocyanatgruppen kann gemäß DIN EN ISO 11909:2007-05 bestimmt werden.

Die erfindungsgemäßen Verbindungen zeichnen sich außerdem durch einen hohen Anteil an Silangruppen bezogen auf das Gewicht der Verbindung aus. Dies verbessert die Härtungseigenschaften von Beschichtungsmitteln, welche die erfindungsgemäßen Verbindungen als Bindemittel umfassen. Somit eignen sich die erfindungsgemäßen Verbindungen insbesondere zur Herstellung schnelltrocknender Beschichtungen.

Der Anteil an Silangruppen bezogen auf das Gewicht der Verbindung wird üblicherweise als Anteil von Silizium bezogen auf das Gewicht der Verbindung angegeben und beträgt vorzugsweise 0,1 bis 10 Gew.-%, bevorzugt 1 bis 7 Gew.-%, am meisten bevorzugt 1,5 bis 5 Gew.-%. Der Siliziumanteil kann beispielsweise aus der Menge der für die Herstellung der erfindungsgemäßen Verbindung eingesetzten Aminosilane berechnet werden. Der Siliziumanteil kann außerdem durch induktiv gekoppelte Plasma-Atom-Emissionsspektrometrie (ICP-OES) bestimmt werden.

Die Dichte der Ethoxysilangruppen bezogen auf das Gesamtgewicht der Polyharnstoffverbindung, auch bezeichnet als Ethoxysilanfunktionalität bezogen auf das Festkörpergewicht, beträgt vorzugsweise 2 bis 8 eq/kg, besonders bevorzugt 3 bis 6 eq/kg, am meisten bevorzugt 3,5 bis 4,5 eq/kg. Die Ethoxysilangruppendichte kann aus der Menge der für die Herstellung der erfindungsgemäßen Verbindung eingesetzten Aminosilane berechnet werden.

Die Verbindungen weisen vorzugsweise ein zahlenmittleres Molekulargewicht von 300 bis 6000 g/mol, bevorzugt 800 bis 4000 g/mol, besonders bevorzugt 1000 bis 3000 g/mol, am meisten bevorzugt 1000 bis 2000 g/mol auf. Das gewichtsmittlere Molekulargewicht beträgt vorzugsweise 500 bis 5000 g/mol, bevorzugt 800 bis 3000 g/mol, besonders bevorzugt 1500 bis 2500 g/mol. Das zahlenmittlere bzw. gewichtsmittlere Molekulargewicht kann mittels Gelpermeationschromatographie (GPC) gemäß DIN 55672-1:2016-03 mit THF als Eluent gegen einen Polystyrolstandard ermittelt werden.

### Polyisocyanate

Als Polyisocyanate werden im Rahmen dieser Erfindung Verbindungen bezeichnet, die zwei oder mehr Isocyantgruppen aufweisen.

Einfachste Vertreter dieser Gruppe sind die monomeren Diisocyanate der allgemeinen Strukturformel O=C=N-R-N=C=O, wobei R üblicherweise für einen aliphatischen, cycloaliphatischen oder aromatischen Rest steht.

Geeignete monomere Diisocyanate sind beispielsweise 1,4-Diisocyanatobutan (BDI), 1,5-Diisocyanatopentan (PDI), 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Iso-3,3,5-trimethyl-5-isocyanatomethyl-cyclohexan (Isophorondiisocyanat; IPDI), 1-Isocyanato-l-methyl-4(3)-isocyanatomethylcyclohexan, 2,4'- und 4,4'-Diisocyanatodicyclohexylmethan (H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohex-ylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(isocyanatomethyl)benzol (Xylylendiisocyanat; XDI), 1,3- und 1,4-Bis(1-isocyanato-1-methylethyl)-benzol (TMXDI), Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin und Mischungen davon. Besonders geeignete monomere Diisocyanate sind 1,5-Diisocyanatopentan, 1,6-Hexamethylendiisocyanat und Isophorondiisocyanat.

Desweiteren fallen unter den Begriff Polyisocyanate auch oligomere Verbindungen, die aus mindestens zwei monomeren Polyisocyanaten aufgebaut sind und über mindestens zwei freie Isocyanatgruppen verfügen. Diese oligomeren Polyisocyanate umfassen vorzugsweise Uretdion-, Iso-, Allophanat-, Biuret-, Iminooxadiazindion- und/oder Oxadiazintrionstruktureinheiten.

Vorzugsweise wird ein oligomeres Polyisocyanat auf Basis von 1,5-Diisocyanatopentan, 1,6-Hexamethylendiisocyanat oder Isophorondiisocyanat eingesetzt. Besonders bevorzugt wird ein oligomeres Polyisocyanat auf Basis von 1,6-Hexamethylendiisocyanat oder Isophorondiisocyanat eingesetzt.

Vorzugsweise wird ein oligomeres Polyiscyanat, welches Isocyanurat- und Allophanatgruppen aufweist, eingesetzt.

In einer besonders bevorzugten Ausführungsform wird ein Polyisocyanat auf Basis von Isophorondiisocyanat, welches Isocyanurat- und Allophanatgruppen aufweist, eingesetzt. Dabei handelt es sich um ein oligomeres Polyisocyanat, welches ausgehend von Isophorondiisocyanat durch an sich bekannte Verfahren hergestellt wird. Ein Teil der in dem Isophorondiisocyanat vorhandenen Isocyanatgruppen wird in Gegenwart eines geeigneten Katalysators einer Trimerisierungsreaktion unterworfen. Vor, während und/oder im Anschluss an die Trimerisierung wird dem Reaktionsgemisch ein Alkanol zugegeben, so dass ein Teil der Iscoyanatgruppen mit dem Alkanol über die entsprechende Urethanstufe zum Allophanat reagieren. Die Details dieses Herstellungsverfahrens sind dem Fachmann bekannt und beispielsweise in der EP 0 649 866 A1 offenbart.

Als Alkanol wird dabei vorzugsweise ein aliphatischer Alkohol mit 1 bis 6 Kohlenstoffatomen oder Mischungen dieser Alkohole eingesetzt. Geeignete Alkohole sind beispielsweise Methanol, Ethanol, n- und iso-Propanol, n-Butanol, n-Pentanol, 2-Ethyl-1-hexanol, 1-Octanol, 1-Dodecanol, 1-Hexadecanol. Besonders bevorzugt sind n-Butanol, n-Pentanol und 2-Ethyl-1-hexanol. Vorzugsweise wird eine Mischung umfassend n-Butanol eingesetzt. Besonders bevorzugt wird eine Mischung umfassend n-Butanol und n-Pentanol eingesetzt.

Das Polyisocyanat hat vorzugsweise einen Gehalt an Isocyanatgruppen von 8 bis 20 Gew.-%, bevorzugt 10 bis 18 Gew.-%, besonders bevorzugt 10 bis 15 Gew.-%.

Das Polyisocyanat hat vorzugsweise einen Gehalt an Isocyanuratgruppen, berechnet als C₃N₃O₃ (Molekulargewicht 126 g/mol), von 3,5 bis 24 Gew.-%, bevorzugt 7 bis 17 Gew.-%.

Das Polyisocyanat hat vorzugsweise einen Gehalt an Allophanatgruppen, berechnet als C₂HN₂O₃ (Molekulargewicht 101 g/mol), von 2,5 bis 23 Gew.-%, bevorzugt 5 bis 16 Gew.-%.

Das Polyisocyanat hat vorzugsweise einen Gesamtgehalt an Isocyanatgruppen, Isocyanuratgruppen und Allophanatgruppen von 28 bis 51 Gew.-%.

Ein besonders geeignetes Polyisocyanat ist unter dem Handelsnamen Desmodur XP 2565 kommerziell erhältlich.

Das oligomere Polyisocyanat auf Basis von Isophorondiisocyanat, welches Isocyanurat- und Allophanatgruppen aufweist, kann auch in Form einer Mischung umfassend weitere Polyisocyanate eingesetzt werden. Vorzugsweise beträgt der Anteil von reinem Polyisocyanat auf Basis von Isophorondiisocyanat, welches Isocyanurat- und Allophanatgruppen aufweist, in dieser Mischung mindestens 50 Gew.-%, bevorzugt mindestens 60 Gew.-%, am meisten bevorzugt mindestens 75 Gew.-%, jeweils bezogen auf die Gesamtmenge an reinem Polyisocyanat.

### Aminosilane

Die Verbindungen umfassen Silangruppen, die aus Aminosilanen der allgemeinen Formeln (I) bzw. einer Mischung von Aminosilanen der allgemeinen Formeln (I) und (II) abgeleitet sind.

In einer bevorzugten Ausführungsform sind die erfindungsgemäßen Verbindungen herstellbar durch Umsetzung eines Polyisocyanats mit einem Dialkoxyaminosilan gemäß der allgemeinen Formel (I) und zusätzlich einem Trialkoxyaminosilan gemäß der allgemeinen Formel (II). Diese Verbindungen sind dadurch gekennzeichnet, dass sie mit einer Mischung von Trialkoxy- und Dialkoxysilangruppen funktionalisiert sind. Diese Verbindungen erzielen bereits bei einem relativ niedrigen molaren Anteil von Dialkoxysilangruppen einen ausreichend hohen Glanzwert. Auf diese Weise ist es möglich auf den Einsatz von ausschließlich Dialkoxysilan-funktionalisierten Bindemitteln zu verzichten und diese durch kostengünstiger herzustellende Dialkoxy-/Trialkoxysilan-funktionalisierte Bindemittel zu ersetzen, welche nur einen geringen Anteil an Dialkoxysilangruppen aufweisen.

Der Anteil von Dialkoxyaminosilanen der allgemeinen Formel (I) bezogen auf die Gesamtstoffmenge an Aminosilanen der allgemeinen Formeln (I) und (II) beträgt vorzugsweise 5 bis 90 mol-%, besonders bevorzugt 10 bis 70 mol-%, am meisten bevorzugt 10 bis 50 mol-%.

Dadurch, dass die Reste R¹ unabhängig voneinander ausgewählt sind, können sie auch in einem Molekül für unterschiedliche C₁-C₂₀-Alkyl- und C₆-C₂₀-Arylgruppen stehen. So ist von der erfindungsgemäßen Definition der Reste R¹ beispielsweise auch eine Diethoxy-methylsilyl-Gruppe umfasst.

Vorzugsweise umfassen die Verbindungen Ethoxy- oder Methoxysilangruppen. Die Reste R¹ stehen deshalb bevorzugt für Ethyl und/oder Methyl. Besonders bevorzugt stehen die Reste R¹ für Ethyl.

Besonders bevorzugt handelt es sich bei den Aminosilanen der Formeln (I) und (II) um Aminopropylsilane mit n = 3.

Vorzugsweise handelt es sich um sekundäre Aminosilane, bei denen die Reste R² unabhängig voneinander ausgewählt sind aus C₁-C₂₀-Alkyl , C₃-C₂-Cycloalkyl, und -CHR³CH₂COOR⁴. Vorzugsweise stehen die Reste R² für -CHR³CH₂COOR⁴.

Besonders bevorzugt handelt es sich um sekundäre Aminosilane, die durch Umsetzung eines primären Aminosilans mit Estern der Maleinsäure, Fumarsäure oder Zimtsäure erhalten werden können.

Vorzugsweise steht R³ deshalb für C₆-C₁₂-Aryl oder -COOR⁴, besonders bevorzugt für Phenyl oder -COOR⁴. Am meisten bevorzugt steht R³ für -COOR⁴.

Die Reste R⁴ sind vorzugsweise ausgewählt aus C₁-C₆-Alkyl, beispielsweise Methyl, Ethyl, n- oder iso-Propyl, n-Butyl, iso-Butyl, sec-Butyl, tert-Butyl, n-Pentyl, 2-Pentyl oder 3-Pentyl. Am meisten bevorzugt stehen die Reste R⁴ für Ethyl oder Methyl.

In einer besonders bevorzugten Ausführungsform werden als Aminosilane der Formeln (I) und (II) die Verbindungen N-(3-Triethoxysilylpropyl)asparaginsäurediethylester und N-(3-Diethoxymethylsilylpropyl)asparaginsäurediethylester eingesetzt.

### Zusätzliche Alkohle und Amine

Die Verbindungen weisen vorzugsweise weitere Harnstoff- bzw. Urethangruppen auf, welche durch Umsetzung eines Teils der Isocyanatgruppen des Polyisocyanats mit einem Dialkylamin bzw. einem Alkohol erhältlich sind. Auf diese Weise lässt sich der Anteil an silanmodifizierten Endgruppen einstellen.

Als Dialkylamin kann vorzugsweise eine Verbindung der Formel NH(R⁵)₂ eingesetzt werden, wobei R⁵ jeweils C₁-C₆-Alkyl ist. Ein besonders bevorzugtes Dialkylamin ist Di-n-butylamin.

Als Alkohol kommen hierbei vorzugsweise aliphatische Alkohole mit 1 bis 20 Kohlenstoffatomen in Betracht. Darunter fallen im Rahmen dieser Erfindung auch alkoxylierte Alkohole, welche Ethergruppen umfassen. Besonders bevorzugt sind aliphatische Alkohole mit 1 bis 16 Kohlenstoffatomen. Besonders bevorzugt handelt es sich bei den Alkoholen um Monoalkohole. Geeignete Alkohole sind beispielsweise Methanol, Ethanol, n- und iso-Propanol, n-Butanol, Ethylenglykolmonobutylether, 2-Ethylhexanol, 1-Octanol, 1-Dodecanol, 1-Hexadecanol.

Der Anteil an Dialkylamin bzw. Alkohol, ausgedrückt in der Stoffmenge an Amino- bzw. Hydroxygruppen bezogen auf die Stoffmenge an NCO-Gruppen des Polyisocyanats, beträgt vorzugsweise 10 bis 50 %, besonders bevorzugt 20 bis 40 %, am meisten bevorzugt 25 bis 35 %.

### Quervenetzende Polyole

Als Alkohol können auch Polyole verwendet werden, wodurch es zu einer Vorvernetzung der Polyisocyanatmoleküle kommen kann. Vorzugsweise handelt es sich bei der erfindungsgemäßen Verbindung jedoch um eine unvernetzte Verbindung und es werden keine Polyole eingesetzt.

Einsetzbare Polyole weisen vorzugsweise ein zahlenmittleres Molekulargewicht Mₙ von 400 bis 8000 g/mol, bevorzugt von 400 bis 6000 g/mol und besonders bevorzugt von 400 bis 3000 g/mol auf. Ihre Hydroxylzahl beträgt vorzugsweise 22 bis 700 mg KOH/g, bevorzugt 30 bis 300 mg KOH/g und besonders bevorzugt 40 bis 250 mg KOH/g. Die Polyole weisen vorzugsweise eine OH-Funktionalität von 1,5 bis 6, bevorzugt von 1,7 bis 5 und besonders bevorzugt von 1,8 bis 5 auf.

Einsetzbare Polyole sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Poly, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole Polyacrylatpolyole oder Polycarbonatpolyole, besonders bevorzugt sind Polyetherpolyole, Polyestherpolyole und Polycarbonatpolyole.

Als Polyetherpolyole seien z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 5, OH-Zahlen von 22 bis 700, bevorzugt von 40 bis 600 mg KOH/g Feststoff und Molekulargewichte Mₙ von 106 bis 4000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente sind Polypropylenoxidpolyole, Polyethylenoxidpolyole und Polytetramethylenoxidpolyole.

Gut geeignete Beispiele für Polyesterpolyole sind die an sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität > 2 zu erzielen, können gegebenenfalls Polyole mit einer Funktionalität von 3 anteilig verwendet werden, beispielsweise Trimethylolpropan, Glycerin, Erythrit, Pentaerythrit, Trimethylolbenzol oder Trishydroxyethylisocyanurat.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure, verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. ε-Caprolacton, Butyrolacton und Homologe.

Bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure.

Mögliche einsetzbare Polyester sind auch Polycaprolactonpolyole, wie sie von der Firma Perstorp als CAPA Polycaprolactonpolyole kommerziell erhältlich sind.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Anstelle der oben beschriebenen polymeren Polyether-, Polyester- oder Polycarbonatpolyolen kann man auch niedermolekulare Polyole im Molgewichtsbereich von 62 - 400 g/mol für die Herstellung der erfindungsgemäßen Verbindungen verwenden. Geeignete niedermolekulare Polyole sind kurzkettige, d.h. 2 bis 20 Kohlenstoffatome enthaltende, aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 2,2,4-Trimethyl-1,3-pentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Die genannten Polyole können alleine oder in Mischung verwendet werden.

### Herstellungsverfahren

Die Erfindung betrifft außerdem ein Verfahren zur Herstellung der erfindungsgemäßen Polyharnstoffverbindung durch
a) Bereitstellen eines Polyisocyanats,
b) Umsetzen zumindest eines Teils der NCO-Gruppen des Polyisocyanats mit einem Dialkoxyaminosilan gemäß der allgemeinen Formel (I)

   R¹(R¹O)₂Si(CH₂)ₘNHR² (I)
c) gegebenenfalls Umsetzen eines Teils der der NCO-Gruppen des Polyisocyanats mit einem Trialkoxyaminosilan gemäß der allgemeinen Formel (II)

   (R'O)₃Si(CH₂)ₙNHR² (II)

   wobei die Reste R¹ unabhängig voneinander ausgewählt sind aus C₁-C₂₀-Alkyl oder C₆-C₂₀-Aryl,
   n und m jeweils ganze Zahlen zwischen 1 und 4 sind,
   die Reste R² unabhängig voneinander ausgewählt sind aus -H, C₁-C₂₀-Alkyl , C₃-C₂-Cycloalkyl, und -CHR³CH₂COOR⁴,
   die Reste R³ unabhängig voneinander ausgewählt sind aus H, C₁-C₂₀-Alkyl und -COOR⁴, und
   die Reste R⁴ unabhängig voneinander C₁-C₂₀-Alkyl darstellen.

In einer Ausführungsform umfasst das Verfahren als Schritt d) zusätzlich das Umsetzen eines Teils der NCO-Gruppen des Polyisocyanats mit einem Dialkylamin oder einem Alkohol.

Die Schritte b) bis d) können zeitgleich oder in beliebiger Reihenfolge nacheinander durchgeführt werden.

Vorzugsweise erfolgt die Zugabe des Dialkylamins oder des Alkohols in Schritt d) vor der Zugabe der Aminosilane der allgemeinen Formeln (I) und (II). Die Zugabe der Aminosilane der allgemeinen Formeln (I) und (II) erfolgt vorzugsweise zeitgleich.

Die Umsetzung der Schritte b) bis d) erfolgt in flüssiger Phase, gegebenenfalls in Gegenwart eines zusätzlichen Lösungsmittels. Grundsätzlich ist die Umsetzung von Polyisocyanaten mit Aminosilanen dem Fachmann bekannt. Die Umsetzung der NCO-Gruppen des Polyisocyanats mit dem Aminosilan bzw. dem Dialkylamin erfolgt vorzugsweise bei einer Temperatur von weniger als 130°C, bevorzugt im Bereich von 30 bis 80°C. Die Umsetzung der NCO-Gruppen des Polyisocyanats mit dem Alkohol wird vorzugsweise bei Temperaturen von 20 °C bis 200 °C, bevorzugt 40 °C bis 140 °C und besonders bevorzugt von 60 °C bis 120 °C durchgeführt. Vorzugsweise wird als Lösungsmittel 1 -Methoxy-2-propylacetat oder Butylacetat zugegeben.

Die Umsetzung der freien NCO-Gruppen mit dem Dialkylamin kann ohne Katalyse erfolgen.

Als Alkohol kann wie oben beschrieben ein Monoalkohol oder ein Polyol eingesetzt werden. Vorzugsweise wird ein Monoalkohol eingesetzt. Die Umsetzung der freien NCO-Gruppen mit Monoalkoholen oder Polyolen zu Urethangruppen kann unkatalysiert erfolgen, wird aber bevorzugt durch Katalyse beschleunigt. Zur Beschleunigung der NCO-OH-Reaktion kommen dem Fachmann an sich bekannte Urethanisierungskatalysatoren wie beispielsweise Organozinnverbindungen, Bismuthverbindungen, Zinkverbindungen, Titanverbindungen, Zirkoniumverbindungen oder aminische Katalysatoren in Frage.

Im Herstellungsverfahren wird diese Katalysatorkomponente, sofern mitverwendet, in Mengen von 0,001 Gew.-% bis 5,0 Gew.-%, bevorzugt 0,005 Gew.-% bis 2 Gew.-% und besonders bevorzugt 0,01 Gew.-% bis 1 Gew.-% bezogen auf das Gesamtgewicht der Reaktionsmischung eingesetzt.

Die Reaktion wird vorzugsweise fortgeführt, bis ein vollständiger Umsatz der NCO-Gruppen des Polyisocyanats erreicht ist. Der Verlauf der Reaktion wird sinnvollerweise durch die Überprüfung des NCO-Gehaltes überwacht und ist beendet, wenn der entsprechende theoretische NCO-Gehalt erreicht und konstant ist. Dies kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehaltes, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Es ist unerheblich, ob das Verfahren kontinuierlich z.B. in einem Statik-Mischer, Extruder oder Kneter oder diskontinuierlich z.B. in einem Rührreaktor durchgeführt wird. Bevorzugt wird das Verfahren in einem Rührreaktor durchgeführt.

### Beschichtungen

Die Erfindung betrifft außerdem feuchtigkeitshärtende Beschichtung umfassend die erfindungsgemäße Polyharnstoffverbindung und einen Vernetzungskatalysator. Es handelt sich bei der erfindungsgemäßen Beschichtung vorzugsweise um eine Deckbeschichtung für ein Korrosionsschutzsystem.

Der Anteil der erfindungsgemäßen Polyharnstoffverbindung in der Beschichtung beträgt vorzugsweise 10 bis 80 Gew.-%, bevorzugt 20 bis 70 Gew.-%, besonders bevorzugt 30 bis 60 Gew.-%, bezogen auf das Gesamtgewicht der Beschichtung.

### V ernetzungskatal ysatoren

Als Vernetzungskatalysator wird im Rahmen dieser Erfindung eine Verbindung bezeichnet, welche die Kondensationsreaktion der Alkoxysilangruppen der erfindungsgemäßen Polyharnstoffverbindung in Gegenwart von Wasser katalysiert. Als Vernetzungskatalysator können die im Stand der Technik bekannten Katalysatoren verwendet werden. Bei dem Katalysator kann es sich beispielsweise um einen Metallkatalysator oder eine phosphor- und/oder stickstoffhaltige Verbindung handeln.

Geeignete Metallkatalysatoren umfassen vorzugsweise ein Metall ausgewählt aus Zn, Sn, Ti, Zr und Al. Vorzugsweise handelt es sich um Organozinkverbindungen, Organozinnverbindungen, Organotitanate, Organozirconate und Organoaluminate. Die Organotitanate, Organozirconate und Organoaluminate weisen bevorzugt Liganden auf, welche ausgewählt sind aus einer Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können. Geeignete Metallkatalysatoren sind beispielsweise in der US 2016/0244606 A1 beschrieben.

Beispiele für geeignete phosphorhaltige Katalysatoren sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-monoester und -diester, eingesetzt.

Saure Katalysatoren wie Sulfonsäuren sind ebenfalls als Katalysatoren verwendbar, wie in der DE 102012204298 beschrieben. Darüber hinaus können auch Carboxylate verwendet werden, wie sie ebenfalls in der DE 102012204298 beschrieben werden.

Ganz besonders bevorzugt werden als Katalysator die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchen die Phosphorsäureester blockiert werden, sind insbesondere tertiäre Amine, beispielsweise bicyclische Amine, wie z. B. Diazabicyclootan (DABCO), 5-Diazabicyclo[4.3.0]non-5-en (DBN), 1,8-Diazabicyclo[5.4.0]undec-7-en (DBU), Dimethyldodecylamin oder Triethylamin, zu nennen.

Geeignete stickstoffhaltige Katalysatoren sind beispielsweise Amidine; Amine wie insbesondere N-Ethyl-diisopropylamin, N,N,N',N'-Tetramethylalkylendiamine, Polyoxyalkylenamine, 1,4-Diazabicyclo[2.2.2]octan; Aminosilane wie 3-Amino-propyl-trimethoxysilan, 3-Aminopropyldimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium.

Besonders bevorzugte Vernetzungskatalysatoren sind Organotitanate und Amidine.

Bevorzugte Organotitanate sind insbesondere Bis(ethylacetoacetato)-diisobutoxy-titan(IV), Bis(ethylacetoacetato)-diisopropoxy-titan(IV), Bis(acetylacetonato)-diisopropoxy-titan(IV), Bis-(acetylacetonato)-diisobutoxy-titan(IV), Tris(oxyethyl)-amin-isopropoxy-titan(IV), Bis[tris(oxyethyl)amin]-diisopropoxytitan(IV), Bis(2-ethylhexan-1,3-dioxy)-titan(IV), Tris[2-((2-aminoethyl)-amino)ethoxy] -ethoxy-titan(IV), Bis(neopentyl(diallyl)oxy-diethoxytitan(IV), Titan(IV)-tetrabutanolat, Tetra-(2-ethylhexyloxy)titanat, Tetra-(isopropoxy)titanat und Polybutyltitanat.

Bevorzugte Amidine sind insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]-undec-7-en; Methyltriazabicyclodecen, Guanidine wie Tetramethylguanidin, 2-Guanidinobenzimidazol, Acetylacetoneguanidin, 1,3-Di-o-tolylguanidin, 1,3-Diphenylguanidin, Tolylbiguanidin, 2-tert.Butyl-1,1,3,3-tetramethylguanidin; und Imidazole wie N-(3-Trimethoxysilylpropyl)-4,5-dihydroimidazol und N-(3-Triethoxysilylpropyl)-4,5 -dihydroimidazol.

Besonders bevorzugt werden als Vernetzungskatalysator 1,8-Diazabicyclo[5.4.0]undec-7-en (DBU) oder 1,5-Diazabicyclo[4.3.0]non-5-en (DBN) eingesetzt.

Der Anteil an Vernetzungskatalysator in der Beschichtung beträgt vorzugsweise 0,001 bis 5 Gew.-%, bevorzugt 0,005 bis 2 Gew.-%, besonders bevorzugt 0,01 bis 1 Gew.-%, bezogen auf das Gesamtgewicht der Beschichtung.

### Weitere Beschichtungsbestandteile

Die Beschichtung kann zusätzlich in der Lacktechnologie bekannte Lösungsmittel, Füllstoffe, Pigmente und sonstige Lackadditive enthalten.

Geeignete Lösungsmittel sind beispielsweise 2-Ethylhexanol, Aceton, 2-Butanon, Methylisobutylketon, Butylacetat, Ethylacetat, 1-Methoxy-2-propylacetat (MPA), 3-Methoxy-l-butylacetat, Propylen-n-Butylether, Toluol, Methylethylketon, Xylol, 1,4-Dioxan, Diacetonalkohol, N-Methylpyrrolidon, Dimethylacetamid, Dimethylformamid, Dimethylsulfoxid, Methylethylketon, Solvent Naphta (Kohlenwasserstoffgemisch) oder beliebige Gemische solcher Lösungsmittel.

Bevorzugte Lösungsmittel hierbei sind die an sich in der Polyurethanchemie gängigen Lösungsmittel wie Butylacetat, Ethylacetat, 1-Methoxy-2-propylacetat (MPA), 3-Methoxy-1-butylacetat, Propylen-n-Butylether, Toluol, 2-Butanon, Xylol, 1,4-Dioxan, Methylethylketon, N-Methylpyrrolidon, Dimethylacetamid, Dimethylformamid, Methylethylketon, Solvent Naphta (Kohlenwasserstoffgemisch) oder beliebige Gemische solcher Lösungsmittel.

Besonders bevorzugte Lösungsmittel sind Lösungsmittel wie Butylacetat, 1-Methoxy-2-propylacetat (MPA), 3-Methoxy-1-butylacetat, Ethylacetat, Propylen-n-Butylether, Methylethylketon, Toluol, Xylol, Solvent Naphta (Kohlenwasserstoffgemisch) sowie deren Mischungen.

Der Anteil an Lösungsmittel in der Beschichtung beträgt vorzugsweise 0,5 bis 40 Gew.-%, bevorzugt 1 bis 30 Gew.-%, besonders bevorzugt 2 bis 25 Gew.-%,

Geeignete Lackadditive sind insbesondere die in der Lacktechnologie bekannten Mattierungsmittel, Flammschutzmittel, Verlaufshilfsmittel, Netz- und Dispergieradditive, Entschäumer, Entlüftungsmittel, Antioxidantien, Lichtschutzmittel, Wasserfänger, Verdickungsmittel und Thixotropieträger wie sie beispielsweise in dem "Lehrbuch der Lacke und Beschichtungen, Band III, Lösemittel, Weichmacher, Additive, Zwischenprodukte", H. Kittel, Verlag W.A. Colomb in der Heenemann GmbH, Berlin-Oberschwandorf, 1976, S. 237-398, beschrieben sind.

Der Anteil an Lackadditiven in der Beschichtung beträgt vorzugsweise 0,5 bis 15 Gew.-%, bevorzugt 1 bis 10 Gew.-%, besonders bevorzugt 2 bis 7 Gew.-%, bezogen auf das Gesamtgewicht der Beschichtung.

Geeignete Füllstoffe sind beispielsweise Schwerspat, Kreide oder Talcum. Weiterhin können Füllstoffe mit Barriere-Wirkung eingesetzt werden, wie z.B. plättchenförmige Schichtsilikate oder Schichtaluminosilikate, Graphit, Aluminiumplättchen oder Barrierepigmente wie beispielsweise Eisenglimmer und Nanofüllstoffe wie z.B. Tone und Aluminiumsilikate. Wobei die Füllstoffe alleine oder in Kombination eingesetzt werden können.

Der Anteil an Füllstoff in der Beschichtung beträgt vorzugsweise 1 bis 30 Gew.-%, bevorzugt 3 bis 20 Gew.-%, besonders bevorzugt 5 bis 15 Gew.-%, bezogen auf das Gesamtgewicht der Beschichtung.

Geeignete Pigmente sind die in der Lacktechnologie bekannten Pigmente wie beispielsweise Titandioxid, Zinkoxid, Eisenoxide, Chromoxide oder Russe.

Der Anteil an Pigmenten in einer Beschichtung beträgt vorzugsweise 5 bis 40 Gew.-%, bevorzugt 10 bis 35 Gew.-%, besonders bevorzugt 15 bis 30 Gew.-%, bezogen auf das Gesamtgewicht der Beschichtung.

Eine ausführliche Übersicht über Pigmente und Füllstoffe für Beschichtungen gibt das "Lehrbuch der Lacke und Beschichtungen, Band II, Pigmente, Füllstoffe, Farbstoffe", H. Kittel, Verlag W.A. Colomb in der Heenemann GmbH, Berlin-Oberschwandorf, 1974, S. 17-265.

### Bevorzugte Ausführungsformen

In einer bevorzugten Ausführungsform umfasst die Beschichtung
10 bis 80 Gew.-% der erfindungsgemäßen Polyharnstoffverbindung,
0,5 bis 40 Gew.-% Lösungsmittel,
5 bis 40 Gew.-% Pigmente,
0,5 bis 15 Gew.-% Lackadditive,
1 bis 30 Gew.-% Füllstoff, und
0,001 bis 5 Gew.-% Vernetzungskatalysator,
jeweils bezogen auf das Gesamtgewicht der Beschichtung. Vorzugsweise ergänzen sich die genannten Komponenten zu 100 Gew.-%.

### Verwendung als Bindemittel

Die Erfindung betrifft außerdem die Verwendung der erfindungsgemäßen Verbindung als Bindemittel in einer feuchtigkeitshärtenden Beschichtung. Vorzugsweise dient die Verwendung der erfindungsgemäßen Verbindung der Verbesserung des Glanzwertes der Beschichtung. Dabei handelt es sich insbesondere um eine Verbesserung des gemäß DIN EN ISO 2813 gemessenen Glanzwertes. Vorzugsweise handelt es sich hierbei um eine feuchtigkeitshärte Beschichtung zur Herstellung einer Deckbeschichtung für ein Korrosionsschutzsystem.

### Beispiele

### Synthese alkoxysilanmodifizierter Polyharnstoffverbindungen

In einem Kolben mit Thermometer, KPG-Rührer, Rückflusskühler und Tropftrichter wurden unter Stickstoffatmosphäre bei Raumtemperatur Polyisocyanat und 1-Methoxy-2-propylacetat (MPA) (ca. 20-25 Gew.-% der eingesetzten Menge an Polyisocyanat) vorgelegt. Bei Raumtemperatur wurden dann zunächst Di-n-butylamin innerhalb von 20-45 min zugetropft, falls das Material Di-n-butylamin enthält. Durch die Exothermie der Reaktion steigt die Temperatur der Reaktionsmischung auf 40-50 °C an. Nach Erreichen des theoretisch erwarteten Isocyanatgehaltes wurde das Reaktionsgemisch auf 50 °C erwärmt. Wenn der Ansatz eine sehr hohe Viskosität besaß, wurde vor der weiteren Umsetzung weiteres MPA zugegeben. Dann wurde N-(3-Triethoxysilylpropyl)asparaginsäurediethylester (hergestellt nach DE 4237468 A1, Beispiel 1) und/oder N-(3-Diethoxymethylsilylpropyl)asparaginsäurediethylester (hergestellt analog DE 4237468 A1, Beispiel 1) innerhalb von 60 Minuten bei 50 °C tropfenweise zugegeben und nachgerührt, bis laut IR-Spektroskopie oder durch NCO-Titration kein signifikanter NCO-Gehalt mehr nachweisbar war. Durch schrittweise Zugabe von weiterem MPA wurde der Reaktionsansatz auf eine Viskosität von 3000 bis 4000 mPas bei 23 °C eingestellt.

Die Bestimmung der NCO-Gehalte erfolgte gemäß DIN EN ISO 11909.

Sämtliche Viskositätsmessungen erfolgten mit einem Physica MCR 51 Rheometer der Fa. Anton Paar GmbH (DE) nach DIN EN ISO 3219.

Das zahlen- und gewichtsmittlere Molekulargewicht wurde bestimmt durch Gelpermeationschromatographie (GPC) in Tetrahydrofuran bei 23°C gemäß DIN 55672-1.

Desmodur XP 2565 ist ein Polyisocyanat auf Basis von Isophorondiisocyanat mit Isocyanurat- und Allophanatgruppen. NCO-Gehalt ca. 12.0 %.

Desmodur N 3300 ist ein Polyisocyanat auf Basis von Hexamethylendiisocyanat mit Isocyanuratgruppen. NCO-Gehalt ca. 21.8 %

Gemäß dem oben genannten Herstellungsverfahren wurden die folgenden Beispielverbindungen hergestellt.

### Beispiel 1 (erfindungsgemäßes Beispiel)

| | |
|---|---|
| Desmodur XP 2565 80 %ig in Butylacetat: | 436,25 g (1,25 eq. NCO) |
| N-(3-Diethoxymethylsilylpropyl)asparaginsäurediethylester: | 476,10 g (1,25 eq. Amin) |
| 1-Methoxy-2-propylacetat (MPA): | 187,78 g |
| Viskosität des Endproduktes: | 3170 mPas |
| Polymergehalt des Endproduktes: | 75 % |
| Zahlenmittleres Molgewicht Mₙ gemäß GPC: | 1714 g/mol |
| Gewichtsmittleres Molgewicht M_{w} gemäß GPC: | 2055 g/mol |
| Siliciumgehalt auf Festkörper: | 4,24 % |
| Ethoxysilanfunktionalität auf Festkörper: | 3,03 eq/kg |

### Beispiel 2 (erfindungsgemäßes Beispiel)

| | |
|---|---|
| Desmodur XP 2565 80 %ig in Butylacetat: | 418,80 g (1,20 eq. NCO) |
| N-(3-Triethoxysilylpropyl)asparaginsäurediethylester: | 247,70 g (0,60 eq. Amin) |
| N-(3-Diethoxymethylsilylpropyl)asparaginsäurediethylester: | 228,50 g (0,60 eq. Amin) |
| 1-Methoxy-2-propylacetat (MPA): | 157,06 g |
| Viskosität des Endproduktes: | 2970 mPas |
| Polymergehalt des Endproduktes: | 77 % |
| Zahlenmittleres Molgewicht Mₙ gemäß GPC: | 1481 g/mol |
| Gewichtsmittleres Molgewicht M_{w} gemäß GPC: | 1945 g/mol |
| Siliciumgehalt auf Festkörper: | 4,16 % |
| Ethoxysilanfunktionalität auf Festkörper: | 3,72 eq/kg |

### Beispiel 3 (erfindungsgemäßes Beispiel)

| | |
|---|---|
| Desmodur XP 2565 80 %ig in Butylacetat: | 1047,00 g (3,00 eq. NCO) |
| N-(3-Diethoxymethylsilylpropyl)asparaginsäurediethylester: | 759,57 g (2,10 eq. Amin) |
| Di-n-butylamin: | 116,32 g (0,90 eq Amin) |
| 1-Methoxy-2-propylacetat (MPA): | 424,36 g |
| Viskosität des Endproduktes: | 3390 mPas |
| Polymergehalt des Endproduktes: | 73 % |
| Zahlenmittleres Molgewicht Mₙ gemäß GPC: | 1420 g/mol |
| Gewichtsmittleres Molgewicht M_{w} gemäß GPC: | 1684 g/mol |
| Siliciumgehalt auf Festkörper: | 3,43 % |
| Ethoxysilanfunktionalität auf Festkörper: | 2,45 eq/kg |

### Beispiel 4 (erfindungsgemäßes Beispiel)

| | |
|---|---|
| Desmodur XP 2565 80 %ig in Butylacetat: | 349,0 g (1,0 eq. NCO) |
| N-(3-Triethoxysilylpropyl)asparaginsäurediethylester | 355,77 g (0,90 eq. Amin) |
| N-(3-Diethoxymethylsilylpropyl)asparaginsäurediethylester: | 36,30 g (0,10 eq. Amin) |
| 1-Methoxy-2-propylacetat (MPA): | 130,71 g |

| | |
|---|---|
| Viskosität des Endproduktes: | 2850 mPas |
| Polymergehalt des Endproduktes: | 77 % |
| Zahlenmittleres Molgewicht Mₙ gemäß GPC: | 1688 g/mol |
| Gewichtsmittleres Molgewicht M_{w} gemäß GPC: | 1950 g/mol |
| Siliciumgehalt auf Festkörper: | 3,32 % |
| Ethoxysilanfunktionalität auf Festkörper: | 4,32 eq/kg |

### Beispiel 5 (erfindungsgemäßes Beispiel)

| | |
|---|---|
| Desmodur XP 2565 80 %ig in Butylacetat: | 349,00 g (1,00 eq. NCO) |
| N-(3-Triethoxysilylpropyl)asparaginsäurediethylester | 296,48 g (0,75 eq. Amin) |
| N-(3-Diethoxymethylsilylpropyl)asparaginsäurediethylester: | 90,83 g (0,25 eq. Amin) |
| 1-Methoxy-2-propylacetat (MPA): | 118,19 g |

| | |
|---|---|
| Viskosität des Endproduktes: | 3380 mPas |
| Polymergehalt des Endproduktes: | 78 % |
| Zahlenmittleres Molgewicht Mₙ gemäß GPC: | 1643 g/mol |
| Gewichtsmittleres Molgewicht M_{w} gemäß GPC: | 1954 g/mol |
| Siliciumgehalt auf Festkörper: | 4,20 % |
| Ethoxysilanfunktionalität auf Festkörper: | 4,13 eq/kg |

### Beispiel 6 (Vergleichsbeispiel)

| | |
|---|---|
| Desmodur XP 2565 80 %ig in Butylacetat: | 875,00 g (2,5 eq. NCO) |
| N-(3-Triethoxysilylpropyl)asparaginsäurediethylester: | 1017,50 g (2,5 eq. Amin) |
| 1-Methoxy-2-propylacetat (MPA): | 254,4 g |

| | |
|---|---|
| Viskosität des Endproduktes: | 3030 mPas |
| Polymergehalt des Endproduktes: | 80 % |
| Zahlenmittleres Molgewicht Mₙ gemäß GPC: | 1583 g/mol |
| Gewichtsmittleres Molgewicht M_{w} gemäß GPC: | 1937 g/mol |
| Siliciumgehalt auf Festkörper: | 4,08% |
| Ethoxysilanfunktionalität auf Festkörper: | 4,37 eq/kg |

### Beispiel 7 (Vergleichsbeispiel)

| | |
|---|---|
| Desmodur XP 2565 80 %ig in Butylacetat: | 523,50 g (1,00 eq. NCO) |
| N-(3-Triethoxysilylpropyl)asparaginsäurediethylester | 487,08 g (0,75 eq. Amin) |
| 1-Methoxy-2-propylacetat (MPA): | 210,17 g |
| Viskosität des Endproduktes: | 1580 mPas |
| Polymergehalt des Endproduktes: | 75 % |
| Zahlenmittleres Molgewicht Mₙ gemäß GPC: | 1505 g/mol |
| Gewichtsmittleres Molgewicht M_{w} gemäß GPC: | 1855 g/mol |
| Siliciumgehalt auf Festkörper: | 3,56 % |
| Ethoxysilanfunktionalität auf Festkörper: | 3,81 eq/kg |

### Beispiel 8 (Vergleichsbeispiel)

| | |
|---|---|
| Desmodur XP 2565 80 %ig in Butylacetat: | 187,50 g (0,54 eq. NCO) |
| Desmodur N 3300 | 50,00 g (0,26 eq. NCO) |
| N-(3-Triethoxysilylpropyl)asparaginsäurediethylester: | 223,94 g (0,56 eq. Amin) |
| Di-n-butylamin: | 31,02 g (0,24 eq Amin) |
| 1-Methoxy-2-propylacetat (MPA): | 106,17 g |
| Viskosität des Endproduktes: | 3170 mPas |
| Polymergehalt des Endproduktes: | 76 % |
| Zahlenmittleres Molgewicht Mₙ gemäß GPC: | 1562 g/mol |
| Gewichtsmittleres Molgewicht M_{w} gemäß GPC: | 2013 g/mol |
| Siliciumgehalt auf Festkörper: | 3,45 % |
| Ethoxysilanfunktionalität auf Festkörper: | 3,69 eq/kg |

### Herstellung pigmentierter Deckbeschichtungen

Die oben beschriebenen alkoxysilanmodifizierten Polyharnstoffverbindungen (STP) wurden als Bindemittel zur Herstellung pigmentierter Deckbeschichtungen eingesetzt, deren Zusammensetzung sich aus der folgenden Tabelle ergibt. Soweit nicht anders angegeben bezieht sich die Einwaage an STP auf das Gewicht des STP inklusive Lösungsmittel. Die alkoxysilanmodifizierten Polyharnstoffverbindungen (STP) wurden vor der Verarbeitung mit 1 Gew.-% 1,8-Diazabicyclo-[5.4.0]undec-7-en (DBU) bezogen auf die Einwaage an als Vernetzungskatalysator versehen und per Hand gut vermischt.

Die Herstellung der Deckbeschichtungen erfolgte bei Raumtemperatur, indem Komponente 1 in ein gekühltes Gefäß (doppelwandiges Gefäß mit externer Kühlung durch kaltes Leitungswasser) gegeben wurde. Die Komponente 2 wurde hinzugegeben und die resultierende Mischung bis zur Homogenität bei ca. 600-800 U/min mit einem Dissolver dispergiert. Danach wurde die Komponente 3 unter langsamen Rühren (ca. 600-800 U/min.) zugegeben und danach bei 2800 U/min. für 30 Minuten dispergiert.

Die Deckbeschichtungen wurden nach einem Tag Reifezeit verarbeitet.

Die in der folgenden Tabelle gezeigten Beschichtungen A und B enthalten Vinyltrimethoxysilan (Dynasylan VTMO) als Wasserfänger.

| Deckbeschichtung | A | B* |
|---|---|---|
| **Komponente 1** | | |
| STP | 3 | 6 |
| Einwaage STP | 436,0 | 412,7 |
| Disperbyk 161 (Netz- und Dispergieradditiv) | 11,5 | 11,5 |
| Dynasylan VTMO (Wasserfänger) | 4,0 | 4,0 |
| Byk 141 (Entschäumer) | 3,0 | 3,0 |
| Tinuvin 292 (Lichtschutzmittel) | 3,0 | 3,0 |

| **Komponente 2** | | |
|---|---|---|
| Aerosil R 972 (Thixotropieträger) | 5,4 | 5,4 |
| Bentone SD 2 (Thixotropieträger) | 7,3 | 7,3 |
| MPA (Lösungsmittel) | 65,2 | 194,8 |

| **Komponente 3** | | |
|---|---|---|
| Tronox R-KB-4 (Pigment) | 194,8 | 194,8 |
| Schwerspat EWO (Füllstoff) | 84,0 | 82,4 |

| | | |
|---|---|---|
| *Vergleichsbeispiel | | |

Die in der folgenden Tabelle gezeigten Beschichtungen C bis G enthalten Vinyltriethoxysilan (Dynasylan VTEO) als Wasserfänger.

| Deckbeschichtung | C | D | E | F | G* |
|---|---|---|---|---|---|
| **Komponente 1** | | | | | |
| STP | 4 | 5 | 2 | 3 | 8* |
| Einwaage STP | 545,0 | 545,0 | 545,0 | 545,0 | 545,0 |
| Disperbyk 161 (Netz- und Dispergieradditiv) | 14,4 | 14,4 | 14,4 | 14,4 | 14,4 |
| Dynasylan VTEO (Wasserfänger) | 5,0 | 5,0 | 5,0 | 5,0 | 5,0 |
| Byk 141 (Entschäumer) | 5,0 | 5,0 | 5,0 | 5,0 | 5,0 |
| Tinuvin 292 (Lichtschutzmittel) | 4,0 | 4,0 | 4,0 | 4,0 | 4,0 |

| **Komponente 2** | | | | | |
|---|---|---|---|---|---|
| Aerosil R 972 (Thixotropieträger) | 6,7 | 6,7 | 6,7 | 6,7 | 6,7 |
| Bentone SD 2 (Thixotropieträger) | 9,1 | 9,1 | 9,1 | 9,1 | 9,1 |
| MPA (Lösungsmittel) | 60,0 | 60 | 60 | 60 | 60 |

| **Komponente 3** | | | | | |
|---|---|---|---|---|---|
| Tronox R-KB-4 (Pigment) | 243,5 | 243,5 | 243,5 | 243,5 | 243,5 |
| Schwerspat EWO (Füllstoff) | 125,0 | 130,0 | 125,0 | 105,0 | 120,0 |

| | | | | | |
|---|---|---|---|---|---|
| *Vergleichsversuch | | | | | |

Die in der folgenden Tabelle gezeigten Beschichtungen H und I enthalten Vinyltrimethoxysilan (Dynasylan VTMO) als Wasserfänger und zeichnen sich jeweils durch STP aus, die die gleiche Ethoxysilandichte bezogen auf die Polymermasse besitzen.

| Deckbeschichtung | H | I* |
|---|---|---|
| **Komponente 1** | | |
| STP | 2 | 7* |
| Einwaage STP | 928,6 | 619,1 |
| DBU, Lieferform | 9,28 | 6,19 |
| Disperbyk 161 (Netz- und Dispergieradditiv) | 25,9 | 17,3 |
| Dynasylan VTMO (Wasserfänger) | 9,0 | 6,0 |
| Byk 141 (Entschäumer) | 6,7 | 4,4 |
| Tinuvin 292 (Lichtschutzmittel) | 6,7 | 4,4 |

| **Komponente 2** | | |
|---|---|---|
| Aerosil R 972 (Thixotropieträger) | 12,1 | 8,1 |
| Bentone SD 2 (Thixotropieträger) | 16,3 | 10,9 |
| MPA (Lösungsmittel) | 81,0 | 33,6 |

| **Komponente 3** | | |
|---|---|---|
| Tronox R-KB-4 (Pigment) | 438,3 | 292,2 |
| Schwerspat EWO (Füllstoff) | 189,0 | 114,0 |

| | | |
|---|---|---|
| *Vergleichsversuch mit ausschließlich Triethoxysilangruppen | | |

### Bestimmung der Glanzwerte

Jeweils 100 g der oben aufgeführten pigmentierten Deckbeschichtungen wurden mit 10 g MPA verdünnt. Hierzu wurden 1 Gew% DBU bezogen auf die Einwaage an STP als Katalysator zugegeben, bezogen auf das Gewicht des STPs. Diese Mischung wurde 1 min per Hand gut vermischt. Für Glanzmessungen wurden die Deckbeschichtungen mit einer Rakel (180 µm Nassfilmdicke) auf eine Glasplatte aufgetragen. Die Beschichtungen wurden 7 Tage bei Raumtemperatur getrocknet. Danach wurden die Glanzwerte bei einem Einfallwinkel von 60° mittels eins Reflektometers gemäß der Norm DIN EN ISO 2813 bestimmt.

Die somit ermittelten Glanzwerte für die Beschichtungen A und B sind in der folgenden Tabelle angegeben.

| Deckbeschichtung | Glanzwert (60 °) |
|---|---|
| A | 83 |
| B* | 70 |

| | |
|---|---|
| *Vergleichsversuch mit ausschließlich Triethoxysilangruppen | |

Das Produkt A, welches Diethoxymethylgruppen enthält, zeigt als Beschichtung einen wesentlich höheren Glanz als ein Material, welches nur Triethoxysilangruppen enthält (B).

In gleicher Weise wurden weitere Beschichtungen mit den Deckbeschichtungen C bis G auf Glas hergestellt. Als einzige Variation wird in diesen Beschichtungen anstelle des Wasserfängers Vinyltrimethoxysilan (Dynasylan VTMO) eine vergleichbare Menge an Vinyltriethoxysilan (Dynasylan VTEO) verwendet.

Zu den Beschichtungen wurden jeweils 1 Gew% DBU bezogen auf die Einwaage an STP als Katalysator zugegeben. Diese Mischung wurde 1 min per Hand gut vermischt und anschließend wie oben beschrieben auf Glas aufgebracht und der Glanzwert nach 7 Tagen gemessen:

| Beschichtung | Glanzwert (60 °) |
|---|---|
| C | 82 |
| D | 80 |
| E | 78 |
| F | 82 |
| G* | 68 |

| | |
|---|---|
| *Vergleichsversuch mit ausschließlich Triethoxysilanen | |

Die Tabelle zeigt, dass silanterminierte Prepolymere mit Diethoxymethylgruppen deutlich höhere Glanzwerte erzielen als die entsprechenden Produkte, die nur Triethoxysilangruppen enthalten. Selbst die Produkte, die nur wenige Diethoxymethylsilangruppen neben Triethoxysilangruppen enthalten, erzeugen signifikant höhere Glanzwerte als der Vergleich, der ausschließlich Triethoxysilangruppen enthält.

In einer weiteren Versuchsserie wurden die oben genannten Beschichtungen C bis G auf Glas analysiert, bei denen anstelle des Katalysators DBU wird die gleiche Menge an 5-Diazabicyclo-[4.3.0]non-5-en (DBN) eingesetzt wurde.

Vor der Verarbeitung wurde die entsprechende Beschichtung mit 10% MPA verdünnt. Die Beschichtungen werden wie oben beschrieben auf Glas aufgebracht und der Glanzwert nach 7 Tagen gemessen:

| Beschichtung | Glanzwert (60 °) |
|---|---|
| C | 82 |
| D | 81 |
| E | 79 |
| F | 82 |
| G* | 68 |

| | |
|---|---|
| *Vergleichsversuch mit ausschließlich Triethoxysilanen | |

Die Tabelle zeigt, dass auch bei Verwendung von DBN als Vernetzungskatalysator silanterminierte Prepolymere mit Diethoxymethylgruppen deutlich höhere Glanzwerte erzielen als die entsprechenden Produkte, die nur Triethoxysilangruppen enthalten. Selbst die Produkte, die nur wenige Diethoxymethylsilangruppen neben Triethoxysilangruppen enthalten, erzeugen signifikant höhere Glanzwerte als der Vergleich, der ausschließlich Triethoxysilangruppen enthält.

In gleicher Weise wurden weitere Beschichtungen mit den Deckbeschichtungen H und I auf Glas hergestellt. Vor der Verarbeitung wurde die entsprechende Beschichtung mit 10% MPA verdünnt. Wie oben beschrieben werden die Deckschichtformulierungen auf Glas beschichtet und nach 7 Tagen untersucht. Die erzielten Glanzwerte sind in folgender Tabelle gezeigt.

| Beschichtung | Equivalente SiOEt-Gruppen / kg Polymer | Glanz (60 °) |
|---|---|---|
| H | 3,72 | 80 |
| I* | 3,81 | 74 |

| | | |
|---|---|---|
| * Vergleichsbeispiel | | |

Dieses Beispiel zeigt, dass Beschichtungen, welche Dialkoxysilangruppen enthalten (Beschichtung H), bei annähernd gleicher Ethoxysilandichte bessere Glanzwerte ausweisen als Beschichtungen, welche ausschließliche Trialkoxysilangruppen aufweisen.

Zu dem gleichen Ergebnis führt auch der Vergleich der oben genannten Beschichtungen E und G.

### Untersuchung im Mehrschichtaufbau

Zwei Deckbeschichtungen auf Basis von Diethoxymethylsilangruppen (J und K) wurden in einem Zweischichtaufbau auf Aluminium sowie einem Dreischichtaufbau auf Stahl untersucht. Die Formulierungen der beiden Deckbeschichtungen sind in der folgenden Tabelle aufgeführt.

| Deckbeschichtung | **J** | **K** |
|---|---|---|
| **Komponente 1** | | |
| STP | 1 | 2 |
| Einwaage STP | 773,9 | 773,9 |
| Disperbyk 161 (Netz- und Dispergieradditiv) | 21,6 | 21,6 |
| Dynasylan VTMO (Wasserfänger) | 7,5 | 7,5 |
| Byk 141 (Entschäumer) | 5,6 | 5,6 |
| Tinuvin 292 (Lichtschutzmittel) | 5,6 | 5,6 |

| **Komponente 2** | | |
|---|---|---|
| Aerosil R 972 (Thixotropieträger) | 10,1 | 10,1 |
| Bentone SD 2 (Thixotropieträger) | 13,6 | 13,6 |
| MPA (Lösungsmittel) | 67,5 | 67,5 |

| **Komponente 3** | | |
|---|---|---|
| Tronox R-KB-4 (Pigment) | 365,2 | 365,2 |
| Schwerspat EWO (Füllstoff) | 139,5 | 157,5 |

Zu den oben beschriebenen Beschichtungen wurden jeweils 1 Gew% DBU bezogen auf die Einwaage an STP als Katalysator zugegeben, bezogen auf das Gewicht des STPs. Diese Mischung wurde 1 min per Hand gut vermischt.

### Spritz applikation

Die Spritzapplikation erfolgte mit einer Spritzpistole vom Typ SATAjet RP 3000 mit einer SATA Spritzdüse 1,6 mm bei einem Druck von ca. 2,1 bis 2,2 bar. Es wurde bei dem existierenden Raumklima (leichte Schwankungen in Temperatur und Luftfeuchtigkeit möglich) lackiert. Die Beschichtungssysteme wurden je nach Festkörpergehalt des Bindemittels zwischen 5 bis 10 % mit dem Lösemittel, welches schon im Lacksystem vorhanden ist, verdünnt. Üblicherweise ist dieses Lösungsmittel MPA.

### Zweischichtaufbau auf Aluminium

Auf einer Aluminiumplatte wurde eine polyurethanhaltige Zwischenbeschichtung der Richtrezeptur der Fa. Covestro Deutschland AG mit der Bezeichnung RR 5282 mittels der beschriebenen Spritzapplikation aufgetragen und getrocknet. Als nächstes wurde die Deckbeschichtung mittels der Spritzapplikation aufgetragen und getrocknet.

Der Mehrschichtaufbau wurde durch Spritzapplikation hergestellt. Nach 7 Tagen Lagerung wurde der Glanz der erhaltenen Beschichtung geprüft.

| Versuch | Glanzwert (60 °) |
|---|---|
| **J** | 84 |
| **K** | 83 |

Die erfindungsgemäßen silanterminierten Prepolymere ergeben auch auf einer Zwischenschicht sehr gute Glanzwerte.

### Dreischichtaufbau auf Stahl

Auf einem Stahlblech (gestrahlt SA 2½) wurde als erstes eine 1K-PUR-Grundbeschichtung mittels der beschriebenen Spritzapplikation aufgetragen und anschließend bei Raumtemperatur getrocknet. Die verwendete Grundbeschichtung ist eine 1K PUR Zinkstaub- Grundbeschichtung nach Richtrezeptur der Fa. Covestro Deutschland AG mit der Bezeichnung RR 5280. Nach Trocknung dieser Grundbeschichtung wurde als nächste Schicht eine polyurethanhaltige Zwischenbeschichtung der Richtrezeptur Fa. Covestro Deutschland AG mit der Bezeichnung RR 5282 appliziert und getrocknet. Die Deckbeschichtung wurde ebenfalls mit der beschriebenen Spritzapplikation aufgetragen und getrocknet.

Die beiden ausgehärteten Beschichtungen wurden dann sowohl einem Kondenswassertest als auch einem Salzsprühnebeltest unterzogen.

### Kondenswassertest nach DIN EN ISO 6270-2 CH

In einem geschlossenen Prüfgerät wurde demineralisiertes Wasser auf +40°C erwärmt und verdunstet. Dadurch entstand im Prüfgerät eine kondensierende Feuchte von 100 %. Wärme wurde nach außen abgegeben, wodurch der Taupunkt unterschritten wurde. Der Wasserdampf kondensierte auf den Proben. Die Prüfdauer betrug 1008 h. Nach definierten Zeiten wurde eine Zwischenabmusterung durchgeführt. Zusätzlich erfolgte nach vereinbarter Prüfdauer noch eine Endabmusterung. Dabei wurden die Proben visuell auf Oberflächenveränderungen wie Risse, Krater und Blasenbildung untersucht.

Für den oben beschriebenen Dreischichtaufbau auf Stahl wurde nach 42 Tagen für beide STPhaltigen Beschichtungen keine Oberflächenveränderung festgestellt.

### Salzsprühnebeltest nach DIN EN ISO 9227 NSS

In einem geschlossenen Prüfgerät wurde bei 35 °C eine 5 %ige Natriumchloridlösung eingesprüht. Durch das versprühte Aerosol entstand im Prüfgerät eine korrosionsfördernde Salznebel-Atmosphäre mit kondensierender Feuchte von 100 %.
Die Prüfung erfolgte mit einem DIN-Schnitt. Die Prüfdauer betrug 1440 h. Nach definierten Zeiten wurde eine Zwischenabmusterung durchgeführt und am Ende der Prüfdauer die Unterwanderung am DIN-Schnitt geprüft. Nach der vereinbarten Prüfdauer erfolgte noch eine Endabmusterung. Dabei wurden die Proben visuell auf Oberflächenveränderungen wie Risse, Krater und Blasenbildung untersucht.

Für den oben beschriebenen Dreischichtaufbau auf Stahl wurde nach 60 Tagen für beide STPhaltigen Beschichtungen keine Oberflächenveränderung festgestellt.

Die Ergebnisse zeigen, dass die erfindungsgemäßen STPs dazu beitragen, widerstandsfähige Korrosionsschutzformulierungen zu erhalten.

## Patentansprüche

1. Eine Polyharnstoffverbindung, herstellbar durch Umsetzung eines Polyisocyanats mit einem Dialkoxyaminosilan gemäß der allgemeinen Formel (I)
R¹(R¹O)₂Si(CH₂)ₘNHR² (I)
und gegebenenfalls zusätzlich mit einem Trialkoxyaminosilan gemäß der allgemeinen Formel (II)
(R'O)₃Si(CH₂)ₙNHR² (II)
wobei die Reste R¹ unabhängig voneinander ausgewählt sind aus C₁-C₂₀-Alkyl oder C₆-C₂₀-Aryl,
n und m jeweils ganze Zahlen zwischen 1 und 4 sind,
die Reste R² unabhängig voneinander ausgewählt sind aus -H, C₁-C₂₀-Alkyl , C3-C12-Cycloalkyl, und -CHR³CH₂COOR⁴,
die Reste R³ unabhängig voneinander ausgewählt sind aus H, C₁-C₂₀-Alkyl und -COOR⁴, und
die Reste R⁴ unabhängig voneinander C₁-C₂₀-Alkyl darstellen.

2. Die Verbindung nach einem Anspruch 1, wobei der Anteil von Dialkoxyaminosilanen der allgemeinen Formel (I) bezogen auf die Gesamtstoffmenge an Aminosilanen der allgemeinen Formeln (I) und (II) 5 bis 90 mol-% beträgt.

3. Die Verbindung nach einem der Ansprüche 1 und 2, wobei die Verbindung einen Anteil an freien NCO-Gruppen von weniger als 0,2 Gew.-% aufweist.

4. Die Verbindung nach einem der Ansprüche 1 bis 3, wobei die Verbindung einen Siliziumgehalt von 0,1 bis 5 Gew.-% aufweist.

5. Die Verbindung nach einem der Ansprüche 1 bis 4, wobei die Verbindung ein zahlenmittleres Molekulargewicht von 300 bis 5000 g/mol aufweist.

6. Die Verbindung nach einem der Ansprüche 1 bis 5, wobei die die Reste R² weils -CHR³CH₂COOR⁴ und die Reste R³ jeweils -COOR⁴ darstellen.

7. Die Verbindung nach einem der Ansprüche 1 bis 6, wobei die Reste R¹ unabhängig voneinander ausgewählt sind aus Methyl und Ethyl.

8. Die Verbindung nach einem der Ansprüche 1 bis 7, wobei das Polyisocyanat ein oligomeres Polyisocyanat auf Basis von Isophorondiisocyanat oder Hexamethylendiisocyanat ist.

9. Die Verbindung nach einem der Ansprüche 1 bis 8, wobei das Polyisocyanat ein oligomeres Diisocyanat auf Basis von Isophorondiisocyanat ist, welches mindestens eine Isocyanurat-, Biuret-, Allophanat- und/oder Uretdionstruktureinheit aufweist.

10. Ein Verfahren zur Herstellung einer Polyharnstoffverbindung umfassend Alkoxysilangruppen durch
a) Bereitstellen eines Polyisocyanats,
b) Umsetzen zumindest eines Teils der der NCO-Gruppen des Polyisocyanats mit einem Dialkoxyaminosilan gemäß der allgemeinen Formel (I)
R¹(R¹O)₂Si(CH₂)ₘNHR² (I)
c) gegebenenfalls Umsetzen eines Teils der NCO-Gruppen des Polyisocyanats mit einem mit einem Trialkoxyaminosilan gemäß der allgemeinen Formel (II)
(R¹O)₃Si(CH₂)ₙNHR² (II)
wobei die Reste R¹ unabhängig voneinander ausgewählt sind aus C₁-C₂₀-Alkyl oder C₆-C₂₀-Aryl,
n und m jeweils ganze Zahlen zwischen 1 und 4 sind,
die Reste R² unabhängig voneinander ausgewählt sind aus -H, C₁-C₂₀-Alkyl , C₃-C₁₂-Cycloalkyl, und -CHR³CH₂COOR⁴,
die Reste R³ unabhängig voneinander ausgewählt sind aus H, C₁-C₂₀-Alkyl und -COOR⁴, und
die Reste R⁴ unabhängig voneinander C₁-C₂₀-Alkyl darstellen.

11. Eine feuchtigkeitshärtende Beschichtung umfassend die Verbindung nach einem der Ansprüche 1 bis 9 und einen Vernetzungskatalysator.

12. Die Beschichtung nach Anspruch 11, umfassend
10 bis 80 Gew.-% der Verbindung nach einem der Ansprüche 1 bis 9,
0,5 bis 40 Gew.-% Lösungsmittel,
5 bis 40 Gew.-% Pigmente,
0,5 bis 15 Gew.-% Lackadditive,
1 bis 30 Gew.-% Füllstoff, und
0,001 bis 5 Gew.-% Vernetzungskatalysator,
jeweils bezogen auf das Gesamtgewicht der Beschichtung.

13. Verwendung der Verbindung nach einem der Ansprüche 1 bis 9 als Bindemittel für eine feuchtigkeitshärtende Beschichtung.

14. Die Verwendung gemäß Anspruch 13 zur Verbesserung des Glanzwertes der Beschichtung.

15. Die Verwendung nach einem der Ansprüche 13 und 14, wobei das Bindemittel zur Herstellung einer Deckbeschichtung in einem Korrosionsschutzsystem dient.
